(19) Europäisches Patentamt / European Patent Office / Office européen des brevets

(11) **EP 3 142 356 A1**

(12) **DEMANDE DE BREVET EUROPEEN**

(43) Date de publication:
**15.03.2017  Bulletin 2017/11**

(51) Int Cl.:
*H04N 5/235* (2006.01)    *G05D 1/00* (2006.01)

(21) Numéro de dépôt: **16188577.7**

(22) Date de dépôt: **13.09.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité:  **14.09.2015   FR 1558567**

(71) Demandeur: **Parrot Drones**
**75010 Paris (FR)**

(72) Inventeurs:
• **SRON, Eng Hong**
**75019 Paris (FR)**
• **POCHON, Benoît**
**94300 Vincennes (FR)**

(74) Mandataire: **Dupuis-Latour, Dominique et al**
**Bardehle Pagenberg**
**10, boulevard Haussmann**
**75009 Paris (FR)**

(54) **PROCÉDÉ DE DÉTERMINATION D'UNE DURÉE D'EXPOSITION D'UNE CAMÉRA EMBARQUÉ SUR UN DRONE, ET DRONE ASSOCIÉ**

(57)    L'invention concerne un procédé de détermination dynamique de la durée d'exposition pour la capture d'une image mis en oeuvre dans un drone comprenant une caméra à visée sensiblement verticale. Le procédé comprend une étape de mesure de la vitesse horizontale de déplacement du drone (21), une étape de mesure de la distance entre ledit drone et le sol (22), et une étape de détermination de la durée d'exposition (23) à partir de la vitesse de déplacement du drone mesurée, de distance mesurée entre ledit drone et le sol, d'une quantité de flou prédéterminée et de la distance focale de ladite caméra.

Fig.1

EP 3 142 356 A1

**Description**

L'invention concerne un procédé de détermination dynamique de la durée d'exposition d'une scène pour la capture d'une image par une caméra embarquée sur un drone, et un drone embarquant une caméra et comprenant un tel procédé.

L'AR.Drone 2.0, le Bebop Drone de Parrot SA, Paris, France ou l'eBee de SenseFly SA, Suisse, sont des exemples typiques de drones. Ils sont équipés d'une série de capteurs (accéléromètres, gyromètres 3 axes, altimètre) et d'au moins une caméra. Cette caméra est par exemple une caméra de visée verticale captant une image du terrain survolé ou une caméra de visée frontale captant une image de la scène frontale du drone. Ces drones sont pourvus d'un moteur ou de plusieurs rotors entrainés par des moteurs respectifs aptes à être commandés de manière différenciée afin de piloter le drone en attitude et en vitesse.

Il est en particulier connu du document US2013/325217 un drone comprenant une caméra à visée verticale pointant vers le bas pour évaluer la vitesse du drone par rapport au sol et un télémètre à ultrasons et un capteur barométrique embarqué qui fournissent des mesures pour estimer l'altitude du drone par rapport au sol.

L'invention concerne plus précisément un procédé de détermination dynamique de la durée d'exposition à appliquer pour la capture d'une image par la caméra embarquée dans un drone pour capter une image du terrain survolé ou de la scène visualisée par la caméra frontale.

L'exposition désigne la quantité totale de lumière reçue par la surface sensible, notamment le capteur numérique de la caméra numérique pendant la prise de vue.

Et la durée d'exposition est l'intervalle de temps pendant lequel l'obturateur de la caméra laisse passer la lumière lors d'une prise de vue, et donc la durée, dans le cas d'une caméra numérique, pendant laquelle le capteur reçoit la lumière.

L'exposition est également dépendante du paramètre de sensibilité. La sensibilité, exprimée en ISO, est la mesure de la sensibilité à la lumière des capteurs numériques. C'est une donnée essentielle à la détermination d'une exposition correcte.

Une image captée est correctement exposée lorsque la surface sensible reçoit la bonne quantité de lumière : celle qui permet d'obtenir une image qui n'est ni trop claire ni trop sombre.

Pour obtenir cette exposition correcte, les caméras sont équipées d'un algorithme d'auto-exposition (AE) qui a pour fonction de choisir un couple composé de la durée d'exposition et de la sensibilité du capteur, afin de capter toute scène avec une luminosité cible.

Ces drones équipés d'une telle caméra sont contrôlés pendant le survol du terrain à cartographier via un dispositif de commande ou par le chargement d'une trajectoire que le drone parcourt de manière autonome.

La capture d'images est réalisée soit par le déclenchement successif de la caméra équipant le drone, soit par la réception d'une commande de déclenchement de la caméra, par exemple, par l'utilisateur du drone.

Il est connu que des procédés de détermination d'une exposition sont basés sur un intervalle de validité pour le temps d'exposition et la sensibilité du capteur.

En outre, il est connu des procédés de détermination d'une exposition mettant en place une table de correspondance entre la sensibilité du capteur et la durée d'exposition en fonction de la luminosité de la scène. Ces procédés permettent ainsi d'avoir des paliers et d'adapter au mieux le couple, sensibilité du capteur et durée d'exposition, au regard de la luminosité de la scène à capter.

Ces solutions présentent l'inconvénient d'être basées sur des paramètres fixés par avance, notamment basées sur un ensemble étroit de couples sensibilité, durée d'exposition. La luminosité de la scène, qui est estimée au moment de la capture, permet de déterminer le meilleur couple, sensibilité du capteur et durée d'exposition, parmi l'ensemble des couples paramétrés.

Dans le cas d'utilisation de ces procédés connus, lors de leur mise en oeuvre dans une caméra embarquée dans un drone, il a été observé qu'un temps d'exposition trop long provoque une image floue notamment du fait du mouvement de la caméra, mouvement aussi bien en rotation qu'en translation.

De même, il a été observé que lorsque la sensibilité du capteur est élevée, le bruit dans la scène est augmenté. Le bruit est la présence d'informations parasites qui s'ajoutent de façon aléatoire aux détails de la scène captée numériquement. Il est plus particulièrement visible dans les zones peu éclairées, où le rapport signal / bruit est faible, mais aussi dans les parties uniformes telles qu'un ciel bleu. Il a donc pour conséquence la perte de netteté dans les détails.

Une exposition est correcte lorsque l'image capturée comprend un minimum de bruit et un flou acceptable.

Dans le cadre d'une caméra embarquée sur un drone, la caméra subit les mouvements de rotation et les mouvements de translation du drone.

Les procédés d'auto-exposition connus ne permettent pas une adaptation de la durée d'exposition aux contraintes de mouvement du drone.

Le but de la présente invention est de remédier à ces inconvénients, en proposant une solution permettant la détermination dynamique de la durée d'exposition pour la capture d'une image mise en oeuvre dans un drone afin de capter une image ayant un minimum de bruit et un flou acceptable.

A cet effet, l'invention propose un procédé de détermination dynamique de la durée d'exposition pour la capture d'une image mis en oeuvre dans un drone comprenant une caméra à visée sensiblement verticale. Le procédé se caractérise en ce qu'il comprend :

- une étape de mesure de la vitesse horizontale de déplacement du drone,
- une étape de mesure de la distance entre ledit drone et le sol (Z), et
- une étape de détermination de la durée d'exposition à partir de la vitesse de déplacement du drone mesurée, de distance mesurée entre ledit drone et le sol (Z), d'une quantité de flou (du) prédéterminée et de la distance focale (f) de ladite caméra.

Selon un mode de réalisation, la durée d'exposition ($T_{exp}$) est définie par :

$$T_{exp} = \frac{du * Z}{f * \|\vec{v}\|}$$

avec Z étant la distance mesurée entre ledit drone et le sol,
du étant la quantité de flou,
f étant la distance focale, et
$\|v\|$ étant la vitesse horizontale de déplacement dudit drone.

Dans une forme de réalisation particulière, le procédé comprend en outre une étape de détermination d'une seconde durée d'exposition à partir de la distance focale (f) de ladite caméra, d'une quantité de flou (du) prédéterminée et de la vitesse de rotation (co) dudit drone.

Selon un mode de réalisation, la seconde durée d'exposition ($T_{exp}$) est définie par :

$$T_{exp} = \frac{du * atan\left(\frac{1}{f}\right)}{\omega}$$

avec du étant la quantité de flou,
co étant la vitesse de rotation dudit drone, et
f étant la distance focale.

Selon un mode de réalisation particulier, la quantité de flou (du) étant déterminée par le déplacement de la scène sur le plan image entre l'instant de début et l'instant de fin de l'exposition.

Selon un mode de réalisation, la distance focale de la dite caméra et la quantité de flou sont exprimées en pixel.

Selon un mode de réalisation particulier, la distance focale exprimée en pixel ($f_{pixel}$) est définie par :

$$f_{pixel} = \frac{f_{mm}}{pixPitch}$$

avec fmm étant la distance focale de la caméra exprimée en millimètre, et
pixPitch étant la taille d'un pixel sur le plan image en millimètre sur la scène.

L'invention propose également un procédé de détermination dynamique de la durée d'exposition effective pour la capture d'une image mis en oeuvre dans un drone comprenant une caméra sensiblement verticale, caractérisé en ce que le procédé comprend une étape de détermination de la durée d'exposition effective, ladite durée d'exposition effective étant la durée minimum entre la durée d'exposition déterminée conformément à l'invention décrite précédemment et la seconde durée d'exposition déterminée conformément à l'invention décrite précédemment.

L'invention propose également un drone comprenant une caméra sensiblement verticale apte à mettre en oeuvre le procédé de détermination dynamique de la durée d'exposition pour la capture d'une image par ladite caméra conformément à l'invention décrite.

On va maintenant décrire un exemple de mise en oeuvre de la présente invention, en référence aux dessins annexés.

La figure 1 illustre un drone et un terrain à cartographier.
La figure 2 illustre un procédé de détermination d'une durée d'exposition conforme à l'invention.
La figure 3 illustre un procédé de détermination d'une durée d'exposition effective conforme à l'invention.

0

Nous allons maintenant décrire un exemple de réalisation de l'invention.

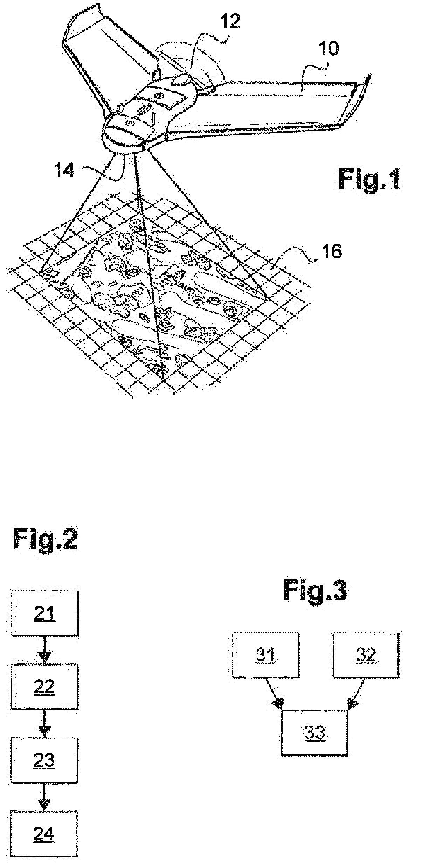

Sur la figure 1, la référence 10 désigne de façon générale un drone. Selon l'exemple illustré en Figure 1, il s'agit d'une aile volante telle que le modèle *eBee* de SenseFly SA, Suisse. Ce drone comporte un moteur 12.

Selon un autre exemple de réalisation, le drone est un quadricoptère tel que le modèle *Bebop Drone* de Parrot SA, Paris, France. Ce drone comporte quatre rotors coplanaires dont les moteurs sont pilotés indépendamment par un système intégré de navigation et de contrôle d'attitude.

Dans l'exemple de réalisation d'un quadricoptère, le drone est muni de capteurs inertiels (accéléromètres et gyromètres) permettant de mesurer avec une certaine précision les vitesses angulaires et les angles d'attitude du drone, c'est-à-dire les angles d'Euler (tangage $\varphi$, roulis $\theta$ et lacet $\psi$) décrivant l'inclinaison du drone par rapport à un plan horizontal d'un repère terrestre fixe UVW, étant entendu que les deux composantes longitudinale et transversale de la vitesse horizontale sont intimement liées à l'inclinaison suivant les deux axes respectifs de tangage et de roulis. Selon ce mode de réalisation, le drone 10 est piloté par un appareil de télécommande distant tel qu'un téléphone ou tablette multimédia à écran tactile et accéléromètres intégrés, par exemple un téléphone cellulaire de type *iPhone* (marque déposée) ou autre, ou une tablette de type *iPad* (marque déposée) ou autre. Il s'agit d'un appareil standard, non modifié si ce n'est le chargement d'un logiciel applicatif spécifique pour contrôler le pilotage du drone 10.

Dans l'exemple de réalisation illustré en figure 1, le drone est piloté par un appareil de télécommande particulier permettant notamment un contrôle du drone à une distance très longue.

L'utilisateur peut contrôler en temps réel le déplacement du drone 10 via l'appareil de télécommande ou programmer un parcours déterminé qui sera chargé dans le drone avant le décollage.

L'appareil de télécommande communique avec le drone 10 via un échange bidirectionnel de données par liaison sans fil de type réseau local Wi-Fi (IEEE 802.11) ou Bluetooth (marques déposées).

Le drone 10 est pourvu d'une caméra embarquée 14 à visée verticale permettant d'obtenir un ensemble d'images, par exemple des images du terrain à cartographier 16, terrain qui est survolé par le drone.

Le drone 10 peut aussi être pourvu d'une caméra embarquée frontale permettant la capture de scène frontale vis-à-vis du drone.

Conformément à l'invention, le drone comprend un procédé de détermination dynamique de la durée d'exposition pour la capture d'une image mis en oeuvre dans un drone comprenant une caméra, notamment une caméra à visée sensiblement verticale.

Ce procédé de détermination dynamique de la durée d'exposition pour la capture d'une image, selon un mode de réalisation particulier, est mis en oeuvre dans la caméra 14 embarquée dans un drone.

Selon l'invention, le procédé de détermination dynamique de la durée d'exposition permet de déterminer la durée d'exposition en continu en fonction des paramètres de vol du drone et des caractéristiques de la caméra 14.

En effet, il a été observé que le mouvement de translation du drone créé un flou de bougé d'une amplitude qui dépend de la distance de la scène à capter, de la focale de l'objectif, de la durée d'exposition et de la vitesse de déplacement (horizontale et verticale) du drone.

En outre, il a été observé que le mouvement de rotation du drone créé un flou de bougé d'une amplitude qui dépend de la focale de l'objectif, de la durée d'exposition et de la vitesse angulaire du drone.

Ainsi, il est nécessaire de tenir compte des paramètres de vol du drone et des caractéristiques de la caméra 14 afin de déterminer dynamiquement la durée d'exposition du capteur de la caméra 14 afin de réaliser une capture d'image de bonne qualité.

De la sorte, la durée d'exposition n'est pas définie par avance mais est déterminée dynamiquement lors de la capture de l'image, et déterminée en fonction des caractéristiques dynamiques du drone et de la scène à capter.

Notamment, la durée d'exposition va être déterminée à partir de la vitesse de déplacement du drone 10, de la distance entre le drone et le sol Z, d'une quantité de flou du prédéterminée et de la distance focale f de la caméra 14.

Pour la détermination de la durée d'exposition, notamment afin de tenir compte du mouvement en translation du drone, on détermine la distance Z entre le drone et le sol.

La distance Z entre le drone et le sol s'étend également de la distance entre la caméra embarquée sur le drone et le sol.

Selon un premier mode de réalisation, la distance Z entre le drone et le sol peut être déterminée par une mesure d'altitude donnée par exemple par un module GPS équipant le drone, au moment du décollage et ensuite à intervalle régulier pendant le vol. De la sorte, la distance Z entre le drone et le sol est approximativement déterminée. Ce mode de réalisation est particulièrement pertinent lorsque le drone survole un sol plan.

Selon un autre mode de réalisation, la distance Z entre le drone et le sol est déterminée par un dispositif d'estimation de l'altitude du drone. Ce dispositif comprend par exemple un système estimateur d'altitude à partir des mesures d'un capteur barométrique et d'un capteur à ultrasons tel que décrit notamment dans le document EP 2 644 240 au nom de Parrot SA.

La distance Z entre le drone et le sol est exprimée en mètre.

Comme vu précédemment, la durée d'exposition va être déterminée notamment en fonction d'une quantité de flou acceptable.

La quantité de flou *du* est fonction de la distance focale f de l'objectif de la caméra 14, de la distance entre le drone et le sol et du déplacement de la scène *dX*, notamment sur le plan image, entre l'instant de début et l'instant de fin de l'exposition.

Ainsi la quantité de flou est définie selon la formule :

$$du = \frac{f * dX}{Z}$$

avec f étant la distance focale de la caméra,
*dX* étant la distance de déplacement d'une scène entre l'instant de début et l'instant de fin de l'exposition et
Z étant l'altitude dudit drone.

La quantité de flou *du* et la distance focale f peuvent être exprimées en millimètre. Selon une alternative de réalisation, la quantité de flou *du* et la distance focale f sont exprimées en pixel.

La distance focale exprimée en pixel ($f_{pixel}$) est définie par :

$$f_{pixel} = \frac{f_{mm}}{pixPitch}$$

avec fmm étant la distance focale de la caméra exprimée en millimètre, et

pixPitch étant la taille d'un pixel sur le plan image en millimètre sur la scène.

Le déplacement de la scène *dX,* notamment sur le plan image, entre l'instant de début et l'instant de fin de l'exposition correspond notamment au déplacement horizontal de la scène, notamment dans le cas de l'aile volante illustrée en figure 1.

Le déplacement de la scène *dX* est notamment dépendant de la vitesse horizontale de déplacement du drone 10. Selon un mode de réalisation, la vitesse est mesurée par une centrale inertielle embarquée dans le drone 10. Selon un autre mode de réalisation, la vitesse est mesurée par analyse du déplacement de la portion de terrain survolé.

Ainsi, la distance de déplacement d'une scène *dX* entre l'instant de début et l'instant de fin de l'exposition est déterminée par la formule :

$$dX = \|\vec{v}\| * T_{exp}$$

avec $\|v\|$ étant la vitesse horizontale de déplacement dudit drone, et

$T_{exp}$ étant la durée d'exposition.

La vitesse horizontale est exprimée en mètre par seconde et la durée d'exposition en seconde.

Ainsi, le procédé de détermination dynamique de la durée d'exposition pour la capture d'une image mis en oeuvre dans un drone 10, en particulier dans la caméra 14, conformément à l'invention, comme illustré en figure 2, comprend, une étape 21 de mesure de la vitesse horizontale de déplacement du drone, une étape 22 de mesure de la distance entre ledit drone et le sol Z, et une étape 23 de détermination de la durée d'exposition à partir de la vitesse de déplacement du drone mesurée, de la distance mesurée entre ledit drone et le sol Z, d'une quantité de flou *du* prédéterminée et de la distance focale f de ladite caméra.

Les étapes 21 de mesure de la vitesse horizontale de déplacement du drone, et 22 de mesure de la distance entre ledit drone et le sol Z peuvent être exécutées en sens inverse ou en parallèle.

La durée d'exposition $T_{exp}$ définie lors de l'étape 23 est déterminée selon un mode de réalisation particulier conformément à l'équation :

$$T_{exp} = \frac{du * Z}{f * \|\vec{v}\|}$$

avec Z étant la distance mesurée entre ledit drone et le sol,

*du* étant la quantité de flou,

f étant la distance focale, et

$\|v\|$ étant la vitesse horizontale de déplacement dudit drone.

Ainsi, la durée d'exposition dynamiquement déterminée est fonction des paramètres de vol du drone 10 à l'instant de la capture de l'image, des paramètres de la caméra 14 et de la quantité de flou acceptable. La quantité de flou est déterminée en fonction de l'application finale de l'image et peut donc prendre des valeurs différentes, par exemple 1 pixel ou 4 pixels.

Selon un mode de réalisation particulier, le procédé de détermination, conformément à l'invention, est apte à déterminer une seconde durée d'exposition notamment afin de prendre en compte le mouvement de rotation du drone 10.

Ainsi, la seconde durée d'exposition est déterminée à partir de la distance focale f de ladite caméra 14, d'une quantité de flou du prédéterminée et de la vitesse de rotation co dudit drone 10.

Afin de déterminer l'angle observé par pixel, il est défini la variable dResAng selon la formule suivante :

$$dResAng = atan\left(\frac{1}{f_{px}}\right)$$

avec $f_{px}$ étant la distance focale de la camera exprimée en pixel.

Ensuite, il est déterminé l'angle parcouru d$\theta$ pendant la durée d'exposition selon la formule :

$$d\theta = \omega * T_{exp}$$

avec co étant la vitesse de rotation dudit drone et $T_{exp}$ étant la durée d'exposition.

Ainsi, on détermine la distance parcourue pendant la durée d'exposition *du,* par exemple exprimée en pixel, selon la formule suivante :

$$du_{px} = d\theta / dResAng = \frac{\omega * T_{exp}}{atan\left(\frac{1}{f_{px}}\right)}$$

avec d$\theta$ étant l'angle parcouru pendant la durée d'exposition,

$T_{exp}$ étant la durée d'exposition,

$f_{px}$ étant la focale exprimée en pixel,

co étant la vitesse de rotation dudit drone et

dResAng étant l'angle observé en pixel.

La vitesse de rotation co dudit drone 10 peut être déterminée par exemple, avant le déclenchement de la capture de l'image ou peut être moyenné sur une durée déterminée. Cette vitesse est exprimée en degré par seconde.

Ainsi, on en déduit que la seconde durée d'exposition $T_{exp}$ afin de tenir compte du mouvement de rotation du drone 10, est définie par :

$$T_{exp} = \frac{du \ *atan\left(\frac{1}{f}\right)}{\omega}$$

avec *du* étant la quantité de flou,
co étant la vitesse de rotation dudit drone, et
f étant la distance focale de la caméra.

Il est à noter que ce procédé de détermination apte à déterminer une durée d'exposition afin de prendre en compte le mouvement de rotation du drone est applicable à une caméra à visée sensiblement verticale et à une caméra à visée sensiblement horizontale.

Selon un mode de réalisation particulier, le procédé de détermination dynamique de la durée d'exposition pour la capture d'une image mis en oeuvre dans un drone 10, en particulier dans la caméra 14, comprend en outre, comme illustré en figure 2, une étape 24 de détermination d'une seconde durée d'exposition à partir de la distance focale f de ladite caméra, d'une quantité de flou *du* prédéterminée et de la vitesse de rotation co dudit drone 10.

L'étape 24 peut être exécutée séquentiellement avant ou après les étapes 21 à 23 ou être exécutée en parallèle des étapes 21 à 23.

Selon un mode de réalisation particulier, l'invention comprend en outre un procédé de détermination dynamique de la durée d'exposition effective pour la capture d'une image mise en oeuvre dans un drone 10 comprenant une caméra 14 à visée sensiblement verticale.

Ce procédé illustré en figure 3, comprend une étape 31 de détermination d'une première durée d'exposition pour la capture d'une image afin de tenir compte du mouvement en translation du drone 10. Cette étape 31 est mise en oeuvre selon les étapes 21 à 23 de la figure 2 et décrites ci-dessus.

Le procédé de détermination dynamique de la durée d'exposition effective comprend une étape 32 de détermination d'une seconde durée d'exposition pour la capture d'une image afin de tenir compte du mouvement en rotation du drone 10. Cette étape 32 est mise en oeuvre selon l'étape 24 de la figure 2 et décrite ci-dessus.

Les étapes 31 et 32 peuvent être exécutées séquentiellement ou en parallèle.

Les étapes 31 et 32 sont suivies d'une étape 33 de détermination de la durée d'exposition effective, ladite durée d'exposition effective étant la durée minimum entre la première durée d'exposition déterminée lors de l'étape 31 et la seconde durée d'exposition déterminée lors de l'étape 32.

L'invention concerne également un drone 10 comprenant une caméra 14, par exemple une caméra sensiblement verticale, apte à mettre en oeuvre le ou les procédés de détermination dynamique de la durée d'exposition pour la capture d'une image par ladite caméra décrits ci-dessus.

A titre d'exemple non limitatif, on considère à l'instant t que le drone 10 embarquant une caméra 14 et équipé dudit procédé de détermination dynamique d'une durée d'exposition conforme à l'invention tel que décrit précédemment, vole à une vitesse de 36 km/h, que le flou acceptable est de 2 pixel, que la distance entre le drone et le sol est de 50 mètres et que la vitesse de rotation est de 100°/sec.

Selon cet exemple et dans le cas d'une caméra ayant une distance focale de 3,98 mm et une taille d'un pixel sur le plan image en millimètre sur la scène de 3,75 μmètre alors la durée d'exposition du capteur selon l'invention est de 9,42 milliseconde afin de tenir compte du mouvement en translation du drone et de 1,08 milliseconde afin de tenir compte du mouvement en rotation du drone.

Selon l'exemple considéré du drone et dans le cas d'une caméra ayant une distance focale de 4,88 mm et une taille d'un pixel sur le plan image en millimètre sur la scène de 1,34 μmètre alors la durée d'exposition du capteur selon l'invention est de 2,75 milliseconde afin de tenir compte du mouvement en translation du drone et de 0,31 milliseconde afin de tenir compte du mouvement en rotation du drone.

**Revendications**

1. Procédé de détermination dynamique de la durée d'exposition pour la capture d'une image mis en oeuvre dans un drone comprenant une caméra à visée sensiblement verticale, **caractérisé en ce qu'**il comprend :

   - une étape de mesure de la vitesse horizontale de déplacement du drone (21),
   - une étape de mesure de la distance entre ledit drone et le sol (Z) (22), et
   - une étape de détermination de la durée d'exposition (23) à partir de la vitesse de déplacement du drone mesurée, de la distance mesurée entre ledit drone et le sol (Z), d'une quantité de flou (du) prédéterminée et de la distance focale (f) de ladite caméra.

2. Procédé de détermination selon la revendication précédente, **caractérisé en ce que** la durée d'ex-

position ($T_{exp}$) est définie par :

$$T_{exp} = \frac{du * Z}{f * \|\vec{v}\|}$$

Avec Z étant la distance mesurée entre ledit drone et le sol,
du étant la quantité de flou,
f étant la distance focale, et
$\|v\|$ étant la vitesse horizontale de déplacement dudit drone.

3. Procédé de détermination selon l'une des revendications précédentes, **caractérisé en ce que** le procédé comprend en outre une étape de détermination d'une seconde durée d'exposition (24) à partir de la distance focale (f) de ladite caméra, d'une quantité de flou (du) prédéterminée et de la vitesse de rotation (co) dudit drone.

4. Procédé de détermination selon la revendication précédente, **caractérisé en ce que** la seconde durée d'exposition ($T_{exp}$) est définie par :

$$T_{exp} = \frac{du * atan\left(\frac{1}{f}\right)}{\omega}$$

Avec du étant la quantité de flou,
co étant la vitesse de rotation dudit drone, et
f étant la distance focale.

5. Procédé de détermination selon l'une des revendications précédentes, **caractérisé en ce que** la quantité de flou (du) est déterminée par le déplacement de la scène sur le plan image entre l'instant de début et l'instant de fin de l'exposition.

6. Procédé de détermination selon l'une des revendications précédentes, **caractérisé en ce que** la distance focale de la dite caméra et la quantité de flou sont exprimées en pixel.

7. Procédé de détermination selon la revendication précédente, **caractérisé en ce que** la distance focale exprimée en pixel ($f_{pixel}$) est définie par :

$$f_{pixel} = \frac{f_{mm}}{pixPitch}$$

Avec $f_{mm}$ étant la distance focale de la caméra exprimée en millimètre, et
pixPitch étant la taille d'un pixel sur le plan image en millimètre sur la scène.

8. Procédé de détermination dynamique de la durée d'exposition effective pour la capture d'une image mis en oeuvre dans un drone comprenant une caméra sensiblement verticale, **caractérisé en ce que** le procédé comprend une étape de détermination de la durée d'exposition effective, ladite durée d'exposition effective étant la durée minimum entre

- la durée d'exposition déterminée selon l'une des revendications 1 ou 2 ou des revendications 5 à 7 prises dans leur dépendance de revendications 1 ou 2 et
- la seconde durée d'exposition déterminée selon l'une des revendications 3 ou 4 ou des revendications 5 à 7 prises dans leur dépendance des revendications 3 ou 4.

9. Drone comprenant une caméra sensiblement verticale apte à mettre en oeuvre le procédé de détermination dynamique de la durée d'exposition pour la capture d'une image par ladite caméra selon l'une des revendications 1 à 8.

12

10

14

16

**Fig.1**

**Fig.2**

21

22

23

24

**Fig.3**

31

32

33

Europäisches
Patentamt

European
Patent Office

Office européen
des brevets

# RAPPORT DE RECHERCHE EUROPEENNE

Numéro de la demande

EP 16 18 8577

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | FR 2 988 618 A1 (PARROT [FR]) 4 octobre 2013 (2013-10-04) | 1,3,5,8,9 | INV. H04N5/235 |
| A | * page 8, ligne 29 - page 9, ligne 20 * * figures 1-3 * ----- | 2,4,6,7 | G05D1/00 |
| Y | US 2009/244301 A1 (BORDER JOHN N [US] ET AL) 1 octobre 2009 (2009-10-01) * alinéa [0003] * * alinéa [0033] - alinéa [0043] * * figure 3 * ----- | 1,3,5,8,9 | |
| A | US 2009/316009 A1 (ITO ATSUSHI [JP] ET AL) 24 décembre 2009 (2009-12-24) * alinéa [0123] - alinéa [0133] * * figures 9, 10A1-10C2 * ----- | 1,5,6,9 | |
| A | US 2011/311099 A1 (DERBANNE THOMAS [FR]) 22 décembre 2011 (2011-12-22) * alinéa [0005] - alinéa [0007] * * alinéa [0029] * * alinéa [0047] - alinéa [0056] * * alinéa [0067] * ----- | 1,9 | DOMAINES TECHNIQUES RECHERCHES (IPC) |
| A | US 2010/171846 A1 (WOOD KENNETH [GB] ET AL) 8 juillet 2010 (2010-07-08) * alinéa [0059] * ----- | 1,9 | H04N G05D |

Le présent rapport a été établi pour toutes les revendications

| Lieu de la recherche | Date d'achèvement de la recherche | Examinateur |
|---|---|---|
| La Haye | 6 février 2017 | Didierlaurent, P |

CATEGORIE DES DOCUMENTS CITES

X : particulièrement pertinent à lui seul
Y : particulièrement pertinent en combinaison avec un
 autre document de la même catégorie
A : arrière-plan technologique
O : divulgation non-écrite
P : document intercalaire

T : théorie ou principe à la base de l'invention
E : document de brevet antérieur, mais publié à la
 date de dépôt ou après cette date
D : cité dans la demande
L : cité pour d'autres raisons

...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 18 8577

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-02-2017

| Document brevet cité au rapport de recherche | | Date de publication | Membre(s) de la famille de brevet(s) | | Date de publication |
|---|---|---|---|---|---|
| FR 2988618 | A1 | 04-10-2013 | CN | 103364785 A | 23-10-2013 |
| | | | EP | 2644240 A1 | 02-10-2013 |
| | | | FR | 2988618 A1 | 04-10-2013 |
| | | | JP | 6054796 B2 | 27-12-2016 |
| | | | JP | 2013212832 A | 17-10-2013 |
| | | | US | 2013325217 A1 | 05-12-2013 |
| US 2009244301 | A1 | 01-10-2009 | CN | 101978687 A | 16-02-2011 |
| | | | EP | 2283647 A2 | 16-02-2011 |
| | | | JP | 2011517207 A | 26-05-2011 |
| | | | TW | 200948050 A | 16-11-2009 |
| | | | US | 2009244301 A1 | 01-10-2009 |
| | | | WO | 2009123679 A2 | 08-10-2009 |
| US 2009316009 | A1 | 24-12-2009 | CN | 101610349 A | 23-12-2009 |
| | | | EP | 2136554 A2 | 23-12-2009 |
| | | | JP | 4666012 B2 | 06-04-2011 |
| | | | JP | 2010004329 A | 07-01-2010 |
| | | | US | 2009316009 A1 | 24-12-2009 |
| US 2011311099 | A1 | 22-12-2011 | CN | 102298070 A | 28-12-2011 |
| | | | EP | 2400460 A1 | 28-12-2011 |
| | | | FR | 2961601 A1 | 23-12-2011 |
| | | | HK | 1164450 A1 | 20-11-2015 |
| | | | JP | 5854655 B2 | 09-02-2016 |
| | | | JP | 2012006587 A | 12-01-2012 |
| | | | US | 2011311099 A1 | 22-12-2011 |
| US 2010171846 | A1 | 08-07-2010 | CN | 101341734 A | 07-01-2009 |
| | | | EP | 1793580 A1 | 06-06-2007 |
| | | | JP | 4912410 B2 | 11-04-2012 |
| | | | JP | 2009518951 A | 07-05-2009 |
| | | | KR | 20080093970 A | 22-10-2008 |
| | | | US | 2010171846 A1 | 08-07-2010 |
| | | | WO | 2007067335 A1 | 14-06-2007 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013325217 A
- EP 2644240 A